# EUROPÄISCHE PATENTSCHRIFT

(11) **EP 0 947 049 B1**
(45) Veröffentlichungstag und Bekanntmachung des Hinweises auf die Patenterteilung: **20.02.2002**
(21) Anmeldenummer: 97954333.7
(22) Anmeldetag: 22.12.1997
(51) Int. Cl.: H03K 19/177, G06F 17/50

(54) **UMKONFIGURIERUNGS-VERFAHREN FÜR PROGRAMMIERBARE BAUSTEINE ZUR LAUFZEIT**
RECONFIGURATION METHOD FOR PROGRAMMABLE COMPONENTS DURING RUNNING TIME
PROCEDE DE RECONFIGURATION POUR COMPOSANTS PROGRAMMABLES PENDANT LEUR DUREE DE FONCTIONNEMENT

(30) Priorität: 20.12.1996 DE 19654593
(43) Veröffentlichungstag der Anmeldung: 06.10.1999
(60) Teilanmeldung: 01113330.3
(73) Patentinhaber: Pact Informationstechnologie GmbH, 80807 Munchen (DE)
(72) Erfinder: VORBACH, Martin, D-76149 Karlsruhe (DE); MÜNCH, Robert, D-76149 Karlsruhe (DE)
(74) Vertreter: Pietruk, Claus Peter, Dipl.-Phys.
(86) Internationale Anmeldenummer: DE9702999
(87) Internationale Veröffentlichungsnummer: WO9831102

(56) Entgegenhaltungen:
- EP-A- 0 678 985
- EP-A- 0 748 051
- MAXFIELD C: "Logic that mutates while-u-wait" EDN (EUR. ED.) (USA), EDN (EUROPEAN EDITION), 7 NOV. 1996, CAHNERS PUBLISHING, USA, Bd. 41, Nr. 23, ISSN 0012-7515, Seiten 137-140, 142, XP002064224
- SALEEBA M: "A self-contained dynamically reconfigurable processor architecture" SIXTEENTH AUSTRALIAN COMPUTER SCIENCE CONFERENCE. ACSC-16, BRISBANE, QLD., AUSTRALIA, 3-5 FEB. 1993, Bd. 15, Nr. 1, pt.A, ISSN 0157-3055, AUSTRALIAN COMPUTER SCIENCE COMMUNICATIONS, 1993, AUSTRALIA, Seiten 59-70, XP002064400

## Beschreibung

### Stand der Technik

Programmierbare Bausteine mit zwei oder mehrdimensionaler Zellanordnung (insbesondere FPGAs, DPGAs und DFPs o.ä.) werden heutzutage auf zwei verschiedene Arten programmiert.
1. Einmalig, das heißt die Konfiguration kann nach der Programmierung nicht mehr geändert werden. Alle Konfigurierten Elemente des Bausteins führen also die gleiche Funktion, über den gesamten Zeitraum durch, in dem die Anwendung abläuft.
2. Im Betrieb, das heißt die Konfiguration kann nach Einbau des Bausteins, durch daß Laden einer Konfigurationsdatei, zum Startbeginn der Anwendung, geändert werden. Die meisten Bausteine (insbesondere die FPGA Bausteine), lassen sich während des Betriebes nicht wieder umkonfigurieren. Bei umkonfigurierbaren Bausteinen, ist eine Weiterverarbeitung von Daten während des Umkonfigurierens meistens nicht möglich und die benötigte Umkonfigurierungszeit erheblich zu groß.
   Aus EP-A-0 748 051 sind Bausteine bekannt, deren unkonfigurierte Elemente zur Laufzeit ohne Beeinträchtigung der Konfigurierten geladen werden können. Eine Möglichkeit konfigurierte und benutzte Elemente umzuladen besteht nicht.
   In EP-A-0 678 985 ist eine Schaltung beschrieben, die durch den Einsatz mehrerer paralleler Konfigurationsregister das umladen eines Bausteines beschleunigt, indem zwischen zwei Registern umgeschaltet wird. Ein Umschalten zur Laufzeit, ohne Beeinträchtigung der arbeitenden Elemente ist nicht gegeben.
   C. Maxfield beschreibt in der EDN vom 7. November 1996 in seinem Artikel "Logic mutates while-u-wait" die Möglichkeit den Umladevorgang eines konfigurierbaren Elementes. Eine Möglichkeit der Beschleunigung ergibt sich daraus jedoch nicht.

Neben den FPGAs, gibt es noch die sogenannten DPGAs. Diese Bausteine speichern eine kleine Anzahl an verschiedenen Konfigurationen, welche durch ein spezielles Datenpaket ausgewählt werden. Eine Umkonfigurierung dieser Speicher während der Laufzeit ist nicht möglich.

### Probleme

Große Probleme bereitet die Umkonfigurierung von gesamten programmierbaren Bausteinen oder Teilen davon während der Laufzeit und dabei besonders die Synchronisation. Alle bisherigen Lösungen halten die Verarbeitung des kompletten Bausteins, während der Umkonfigurierung, an. Ein weiteres Problem ist die Selektion der neu zu ladenden Teilkonfiguration und das Integrieren dieser Teilkonfiguration in die bereits Bestehende Konfiguration.

### Verbesserung durch die Erfindung

Durch das in der Erfindung beschriebene Verfahren ist es möglich einen, zur Laufzeit, umkonfigurierbaren Baustein, effizient und ohne Beeinflussung der nicht an der Umkonfigurierung beteiligten Bereiche, umzuladen. Weiterhin ermöglicht das Verfahren das Selektieren von Konfigurationen in Abhängigkeit der aktuellen Konfiguration. Das Problem der Synchronisation der an der Umkonfiguration beteiligten und nicht beteiligten Bereiche wird ebenfalls gelöst.

### Beschreibung der Erfindung

Übersicht über die Erfindung, Abstrakt Beschrieben wird ein Verfahren zum Umkonfigurieren von programmierbaren Bausteinen, bestehend aus einer zwei oder mehrdimensionalen Zellanordnung. Das Verfahren ermöglicht die Umkonfigurierung des Bausteins oder der Bausteine, ohne die Arbeitsfähigkeit, der nicht an der Umkonfigurierung beteiligten Zellen, einzuschränken. Das Verfahren ermöglicht das Laden von kompletten Konfigurationen oder von Teilkonfigurationen in den oder die programmierbaren Bausteine. Die Einzelheiten und besondere Ausgestaltungen, sowie Merkmale des erfindungsgemäßen Verfahrens zum Umkonfigurierens von programmierbaren Bausteinen, sind Gegenstand der Patentansprüche.

### Detailbeschreibung der Erfindung

Das beschriebene Verfahren setzt einen programmierbaren Baustein voraus, welcher folgende Eigenschaften aufweist:
1. Ladelogik
   Die Ladelogik ist der Teil des Bausteins, welcher das Laden und Eintragen von Konfigurationsworten in die zu konfigurierenden Elemente des Bausteins (Zellen) durchführt.
2. Zellen
   Der Baustein besitzt eine Vielzahl an Zellen, welche einzeln durch die Ladelogik adressiert werden können.
3. Rückmeldung Ladelogik
   Jede Zelle oder Gruppe von Zellen muß der Ladelogik mitteilen können, ob sie umkonfiguriert werden kann.
4. Rückmeldung Zellen
   Jede Zelle muß die Möglichkeit haben, ein STOP Signal an die Zellen zu senden, von denen sie ihre zu verarbeitenden Daten erhält.
5. START/STOP Kennung
   Jede Zelle muß eine Möglichkeit besitzen, ein START/STOP Kennung einzustellen.
   a. Die START Kennung zeichnet eine Zelle als den Beginn einer längeren Verarbeitungskette (Makro) aus.
   b. Die STOP Kennung markiert das Ende des Makros, also den Punkt, an dem die Verarbeitung des Makros ein Ergebnis geliefert hat.

### Aufbau eines Konfigurationswortes

Die Ladelogik ist eine Zustandsmaschine, welche Konfigurationsworte verarbeiten kann. Neben Konfigurationsworten für Zellen, existieren Einträge, welche durch die Ladelogik als Befehle erkannt werden können. Es ist also möglich zu unterscheiden ob der Inhalt des Konfigurationswortes an eine Zelle zu übertragen ist oder einen Befehl für die Zustandsmaschine darstellt.

Ein Konfigurationswort, welches an Zellen des Bausteins übertragen wird, muß dabei mindestens folgende Daten enthalten:
1. Adresse der Zelle. Zum Beispiel als lineare Nummer oder als X,Y Koordinaten.
2. Konfigurationswort, welches in die Zelle übertragen wird. Kennungen und Befehle für die Ladelogik

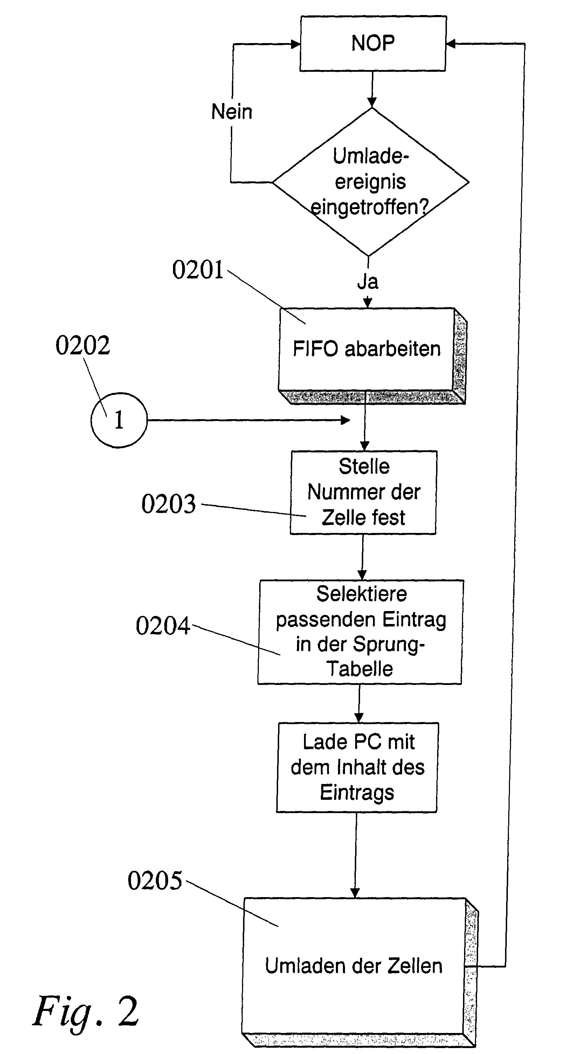

Für eine korrekte Arbeitsweise der Ladelogik, muß diese nur zwei Befehlsworte erkennen können. Dies sind:
1. END
   Dies ist ein Befehl, welche die Ladelogik in einen Zustand versetzt, in dem sie auf das Eintreffen von Ereignissen von Zellen, wartet. (Figur 2)
2. DISPATCH(Eintragsnummer, Adresse) Die Ladelogik trägt in die Adresse, welche durch den Parameter Eintragsnummer angegeben wird, der Sprung-Tabelle den Wert des Parameters Adresse ein.

Weiterhin kann die Ladelogik einen Eintrag als Leer-Eintrag erkennen. Dies wird dadruch erreicht, daß ein bestimmtes Bit-Muster als Leer-Kennung definiert ist, welches durch die Ladelogik erkannt werden kann.

### Die Sprung-Tabelle

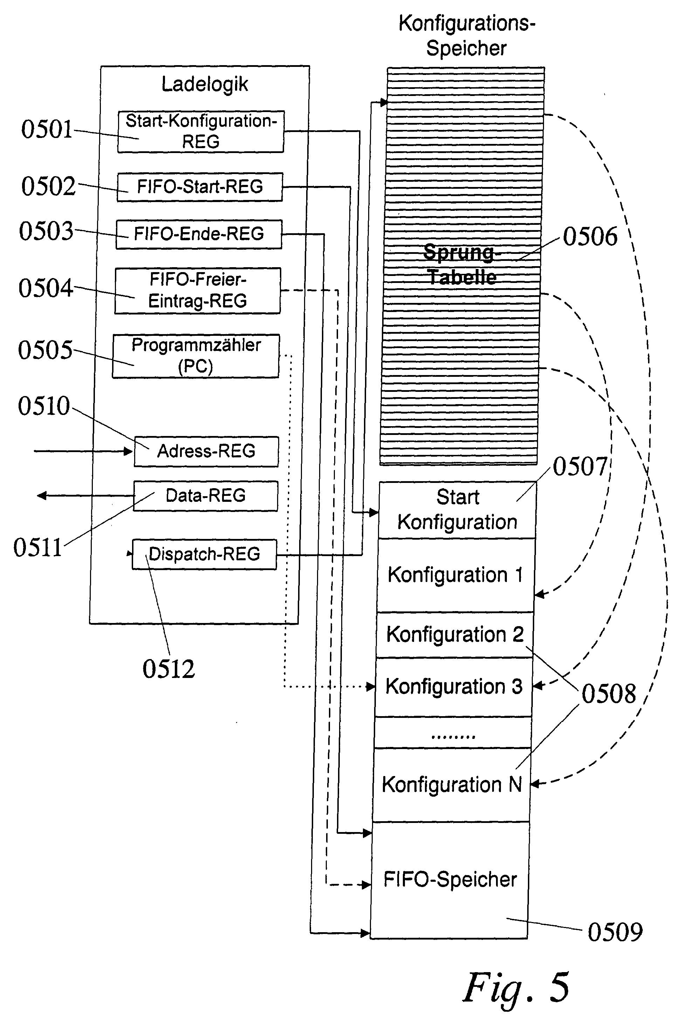

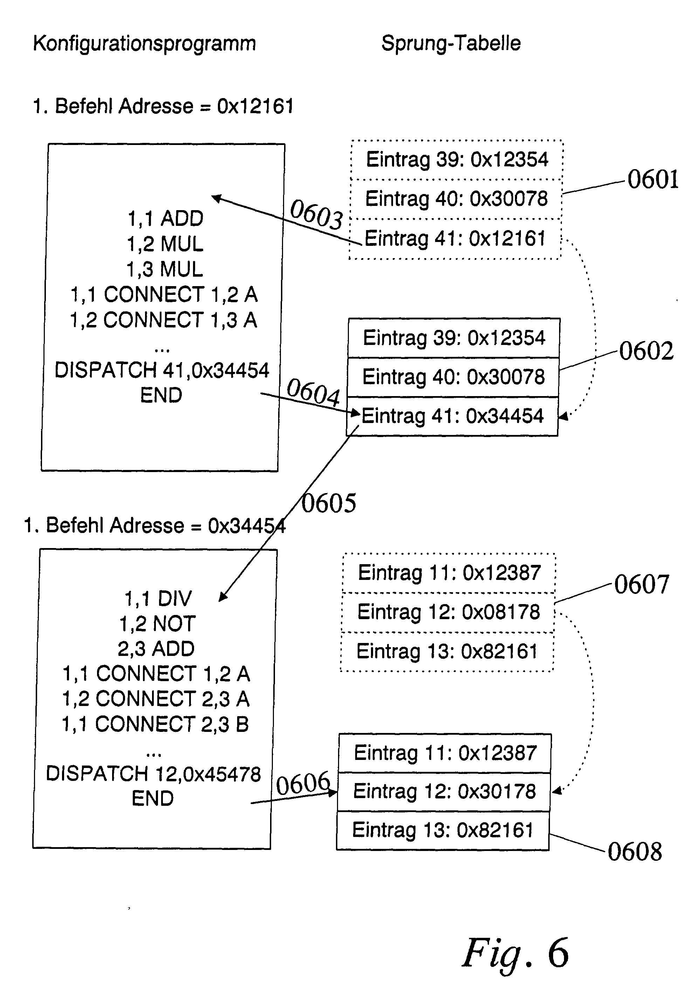

Im Konfigurationsspeicher, existiert eine Sprung-Tabelle (0506). Die Größe der Sprung-Tabelle ist dabei so gewählt, daß für jede Zelle, welche von der Ladelogik addresiert werden kann, genau ein einziger Eintrag vorhanden ist. Zu jeder Zelladresse existiert genau ein einziger Eintrag in der Sprung-Tabelle, welcher durch die Ladelogik berechnet werden kann. (Figur 5 und 6)
In einem Eintrag der Sprung-Tabelle steht eine Speicheradresse (0601). Diese Speicheradresse gibt an, von wo weitere Konfigurationsdaten (0508), aus dem Konfigurationsspeicher, zu lesen sind, falls von dieser Zelle eine Rückmeldung an die Ladelogik erfolgt.

### Start des Systems

Durch einen Reset, also dem Rücksetzen des Systems, beginnt die Ladelogik mit dem Empfangen oder Laden von Konfigurationsdaten, von einem Speicher, in den Konfigurationsspeicher (0101). Alle Zellen des Bausteines sind in dem Zustand, in dem sie konfiguriert werden können. Danach springt die Ladelogik, durch Laden des Programmzählers (PC)(0505), an eine Speicherstelle, welche die Adresse einer Startkonfiguration (0507) enthält (0102). Diese Startkonfiguration wird solange abgearbeitet, bis die Ladelogik eine END-Kennung erkennt (0103). Diese Startkonfiguration programmiert den Baustein derart, daß eine Verarbeitung von Daten beginnen kann. Nach dem Eintragen der Startkonfiguration, wechselt die Ladelogik, auf Grund der END-Kennung, in einen Zustand, in dem sie auf Ereignisse von den Zellen wartet (0104).

### Eintreffen eines Ereignisses einer Zelle

Nach der Verarbeitung von Daten kann eine Zelle eine Rückmeldung an die Ladelogik senden. Diese Rückmeldung (Ereignis) zeigt an, daß die Zelle und damit das Makro in dem die Zelle enthalten ist, seine Arbeit beendet hat und das Umladen erfolgen kann.
Bevor allerdings mit dem Laden einer neuen Konfiguration begonnen wird, wird der nachfolgend beschriebene FIFO-Speicher (First-In-First-Out Speicher) abgearbeitet (0201).
Wichtig ist, daß der Speicher als FIFO-Speicher organisiert ist. Diese Organisation garantiert, daß Zellen die im ersten Versuch nicht umgeladen werden konnten, garantiert im zweiten Versuch als erste wieder an der Reihe sind. Dadurch wird verhindert, daß Zellen welche zwischenzeitlich signalisiert haben, daß sie umkonfiguriert werden können, ganz nach hinten in der Bearbeitung rutschen. In diesem Fall könnte ein Deadlock-Situation auftreten, in der das eine Makro erst umkonfiguriert werden kann, wenn ein anderes Makro umkonfiguriert wurde.
Durch die Rückmeldung an die Ladelogik, erhält die Ladelogik auch die Adresse oder Nummer der Zelle, welche die Rückmeldung ausgelöst hat. Mit Hilfe dieser Nummer, wird der passende Eintrag in der Sprung-Tabelle selektiert (0203, 0204). Die Adresse, welche in diesem Eintrag enthalten ist, gibt den Beginn der zu ladenden Konfiguration innerhalb des Konfigurationsspeichers an (0205).

### FIFO-Speicher

Das Verfahren muß berücksichtigen, daß es sein kann, daß einige Zellen ihre Arbeit noch nicht beendet haben, diese Zellen jedoch schon umgeladen werden sollen. Alle Konfigurationsdaten der Zellen, bei denen eine solche Bedingung zu trifft, werden in einen speziellen Speicherbereich (FIFO-Speicher) kopiert (0506). Jedesmal, bevor eine neue Konfiguration geladen werden soll, wird der FIFO-Speicher durchlaufen. Da eine neue Konfiguration geladen werden soll, haben einige Zellen ihre Arbeit beendet und sind in den Zustand 'umkonfigurierbar' übergegangen. Unter diesen Zellen können sich auch solche befinden, bei denen eine Umkonfigurierung, durch die Ladelogik, in einem früheren Versuch gescheitert ist, da diese Zellen ihre Arbeit noch nicht beendet hatte, diese Umkonfigurierung jetzt aber erfolgreich durchgeführt werden kann. Die Ladelogik lädt den PC mit dem Inhalt des Registers, welches auf den Beginn des FIFO-Speicher zeigt (FIFO-Start-REG) (0502) und ließt die Daten aus dem FIFO-Speicher. Ein Vergleich stellt fest, ob das Ende des FIFO-Speichers erreicht wurde (0301). Ist dies der Fall, so wird an die Stelle in der Zustandsmaschine zurückgesprungen, an der die Umkonfigurierung fortläuft (0202).
Die Abarbeitung des FIFO-Speichers geschieht ähnlich dem einer Konfiguration innerhalb des Konfigurationsspeichers. Es kann der Fall eintreten, daß eine Zelle auch bei einem weiteren Versuch immer noch nicht umkonfiguriert werden kann. In diesem Fall werden die Konfigurationsdaten, falls eine leere Speicherstelle weiter vorne im FIFO-Speicher existiert, in diese Speicherstelle kopiert (0302).
Dieser Kopiervorgang wird dadruch erreicht, daß die Ladelogik die Startadresse des FIFO-Speichers im FIFO-Start-REG (0502) gespeichert hat und die Endeadresse im FIFO-End-REG (0503). Weiterhin kennt die Ladelogik die Adresse des nächsten freien Eintrags (beginnend vom Anfang des FIFO-Speichers) mittels des FIFO-Free-Entry-REG (0504, 0303). Nachdem das Konfigurationswort in den freien Eintrag kopiert wurde (0304), positioniert die Ladelogik den Zeiger des FIFO-Free-Entry-REG auf den nächsten freien Eintrag (0305), innerhalb des FIFO-Speichers. Die Suche erfolgt dabei in Richtung des Endes des FIFO-Speichers. Danach wird der PC auf den nächsten Eintrag innerhalb des FIFO-Speichers gesetzt (0306).

### Umladen von Zellen

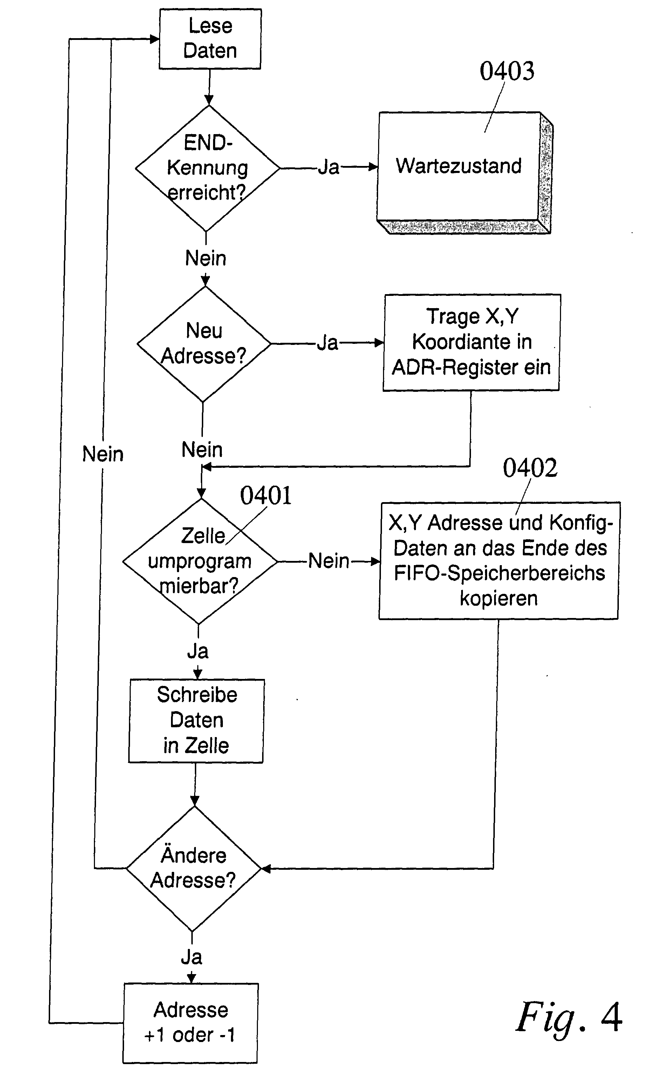

Die Ladelogik liest nun die Konfigurationsdaten aus dem Konfigurationsspeicher. In diesen Daten ist die Adresse der Zelle enthalten, welche umgeladen werden soll (Figur 4). Jede Zelle kann signalisieren, daß sie umgeladen werden kann. Die Ladelogik testet dies (0401). Kann die Zelle umgeladen werden, werden die Konfigurationsdaten von der Ladelogik an die Zelle übertragen.
Ist die Zelle noch nicht bereit, werden die durch die Ladelogik gelesenen Daten in einen Speicherbereich, den FIFO-Speicher, innerhalb des Konfigurationsspeichers geschrieben (0402). Die Adresse an welche die Daten geschrieben werden, ist in einem Register, innerhalb der Ladelogik, abgelegt (FIFO-End-Reg)(0503). Dieser Vorgang wird so oft wiederholt, bis die Ladelogik die END-Kennung des Konfigurationsprogramms erkennt und wieder in den Zustand übergeht, in dem die Ladelogik auf Ereignisse der Zellen wartet (0403).

### Aufbau des Konfigurationsprogramms

Nachdem eine Zelle das Signal zum Umladen gegeben hat und das Makro, in dem die Zelle integriert ist, umgeladen wurde, entsteht eine neue Konfiguration. Die Zelle die vorher das Signal an die Ladelogik geben hat, kann jetzt eine ganz andere Aufgabe haben, insbesondere kann sie nicht mehr die Zelle sein, welche ein Umladesignal, an die Ladelogik abschickt. Wobei es möglich sein kann, daß in der neuen Konfiguration wieder die selbe Zelle das Umladesignal an die Ladelogik schickt.
Mittels des DISPATCH-Befehls, innerhalb des Konfigurationsprogramms, kann eine neue Adresse an die Eintragsposition der Zelle in der Sprung-Tabelle geschrieben werden (0604). Diese neue Adresse kann auf eine neue Konfiguration oder Teilkonfiguration zeigen, welche bei einer Rückmeldung von dieser Zelle geladen werden soll.

### Kurzbeschreibung der Diagramme

Fig. 1 ist ein Ablaufplan der Schritte, die nach einem Systemstart durchzuführen sind.
Fig. 2 ist ein Ablaufplan der Schritte, die nach dem Eintreffen einer Umkonfigurierungsanforderung durchzuführen sind.
Fig. 3 ist ein Ablaufplan der Schritte, die bei der FIFO-Speicher Bearbeitung durchzuführen sind.
Fig. 4 ist ein Ablaufplan der Schritte, die bei der Konfigurierung der Zellen durchzuführen sind.
Fig. 5 zeigt die Ladelogik mit ihren Registern. Weiterhin ist der Konfigurationsspeicher sowie die Unterteilung in Sprung-Tabelle, Start-Konfiguration, weitere Konfigurationen und der FIFO-Speicher zu sehen.
Fig. 6 zeigt zwei Ausschnitte aus einem Konfigurationsprogramm und vier Ausschnitte aus der Sprung-Tabelle und wie diese in zeitlicher Zusammenhang stehen.

### Detailbeschreibung der Diagramme

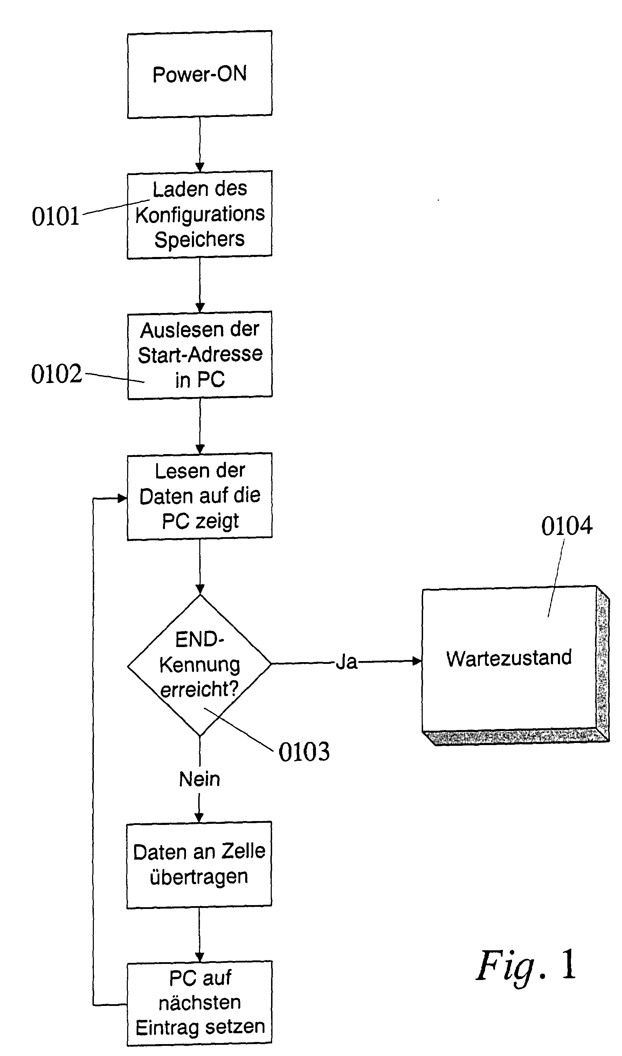

Figur 1 zeigt in einem Ablaufplan, welche Schritte nach einem Systemstart durchzuführen sind. Durch einen Vergleich mit der END-Kennung der Start-Konfiguration wird in den Wartezustand gesprungen (0104).

Figur 2 zeigt in einem Ablaufplan die notwendigen Schritte, welche während des Wartezustandes und, nach dem eine Umkonfigurierung durch eine Zelle signalisiert wurde, durchzuführen sind. Der Ablaufplan besitzt einen Einsprungspunkt (0202), der von anderer Stelle angesprungen wird.

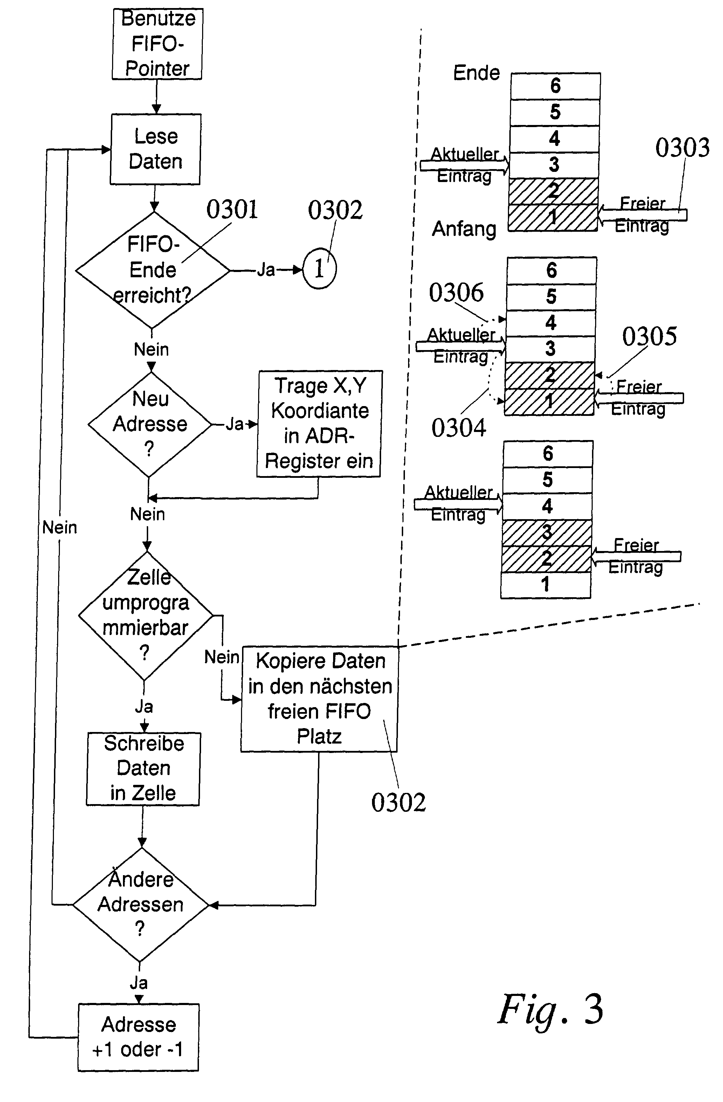

Figur 3 zeigt in einem Ablaufplan, wie die Behandlung des FIFO-Speichers durchzuführen ist. Weiterhin ist dargestellt, wie der Kopiervorgang innerhalb des FIFO-Speichers arbeitet.

Figur 4 zeigt in einem Ablaufplan, welche Schritte bei der Umkonfigurierung der Zellen notwendig sind und wie eine Konfiguration innerhalb des Konfigurierungsprogramms abgearbeitet wird.

Figur 5 stellt die Ladelogik und ihre Register dar. Die Ladelogik besitzt fünf verschiedene Register. Dies sind:
1. Das Start-Konfiguration-REG (0501). In diesem Register steht die Adresse der Startkonfiguration innerhalb des Konfigurationspeichers. Die Daten sind derart in dem Konfigurationsprogramm enthalten, daß sie von der Ladelogik erkannt und in das Start-Konfiguration-REG übernommen werden können.
2. Ein FIFO-Start-REG (0502). Das FIFO-Start-REG zeigt auf den Beginn des FIFO-Speicherbereichs, innerhalb des Konfigurationsspeichers.
3. Ein FIFO-End-REG (0503). Das FIFO-End-REG kennzeichnet das Ende des FIFO-Speichers. An diese Stelle werden die Konfigurationsworte kopiert, welche durch die Ladelogik nicht verarbeitet werden konnten.
4. Ein FIFO-Free-Entry-REG (0504). Das FIFO-Free-Entry-REG zeigt auf den freien Eintrag, der dem Beginn (FIFO-Start-REG) des FIFO-Speichers am nächsten ist. An diese Stelle werden die Konfigurationsworte kopiert, welche während des Durchlaufens des FIFO-Speichers, wiederum nicht durch die Ladelogik verarbeitet werden konnten.
5. Einen Programmzähler (PC). Der PC zeigt auf die Adresse, innerhalb des Konfigurationsspeichers, in dem das nächste, durch die Ladelogik zu verarbeitende, Konfigurationswort, steht.
6. Ein Adress-REG (0510). In diesem Register wird die Adresse einer zu addressierenden Zelle gespeichert.
7. Ein Data-REG (0511). Dieses Register speichert die Konfigurationsdaten, welche an die Zelle gesendet werden sollten, welche durch das Adress-REG angesprochen wird.
8. Ein Dispatch-REG (0512). Das Dispatch-REG speichert die Adresse des Eintrags in der Sprung-Tabelle, auf welchen die Ladelogik zugreift.

Weiterhin ist der Konfigurationsspeicher und sein verschiedenen Sektionen zu sehen. Dies sind:
1. Die Sprung-Tabelle (0506). Für jede Zelle, welche durch die Ladelogik konfigurierbar ist, existiert ein einziger Eintrag. In diesem Eintrag steht die Adresse, welche bei einer Signalisierung durch diese Zelle, in den PC geladen wird.
2. Eine Start-Konfiguration (0507). Die Start-Konfiguration ist jeden Konfiguration, welche nach dem starten des Systems in den Baustein geladen wird.
3. Weitere Konfigurationen (0508). Diese Konfigurationen können während der Laufzeit des Systems in den Baustein geladen werden. Die Konfigurationen bestehen aus Konfigurationswörtern und Ladelogik Befehlen.
4. Einen FIFO-Speicher Bereich (0509). Der FIFO-Speicher Bereich enthält alle die Konfigurationsworte, welche durch die Ladelogik in einem ersten Versuch nicht erfolgreich verarbeitet werden konnten.

Figur 6 zeigt zwei Ausschnitte aus einer Konfiguration. In diesen Ausschnitten sind die Befehle und Konfigurationsworte zu sehen, welche durch die Ladelogik, verarbeitet werden. Weiterhin sind zwei Ausschnitte aus der Sprung-Tabelle zu sehen (0601 und 0607) und der Zustand dieser Ausschnitte (0602 und 0608) nach der Abarbeitung der beiden Konfigurationsausschnitte.

### Ausführungsbeispiele

Es wird angenommen, daß ein Baustein oder mehrere Bausteine durch eine Ladelogik, wie in der Erfindung beschrieben, umkonfiguriert werden sollen. Weiterhin sei angenommen, daß das System bereits die Startkonfiguration geladen hat, und die Ladelogik sich im Zustand 'warten auf ein Ereignis' befindet. Die Ausführung beginnt mit dem Eintreffen eines Ereignisses von Zelle Nummer 41.

Die Ladelogik beginnt zuerst mit der Abarbeitung des FIFO-Speichers (0201). Dabei wird der Beginn des FIFO-Speichers aus dem Register FIFO-Start-REG in den PC übertragen. Die Daten an der Stelle, auf die der PC zeigt, werden gelesen. Nun wird überprüft, ob das Ende des FIFO-Speichers erreicht wurde. Dies ist in diesem Ausführungsbeispiel der Fall, da das System das erste Mal umgeladen wird.
Die Adresse der Zelle, welche das Signal ausgelöst hat, wird durch die Ladelogik in eine Adresse der Sprung-Tabelle umgerechnet. Diese berechnete Adresse wird in das Distpatch-REG geladen (0512). Die Ladelogik liest nun die Adresse aus der Sprung-Tabelle (0506), welche an der Speicheradresse gespeichert ist, die durch das Dispatch-REG adressiert wird (0601). Diese Adresse wird in den PC geladen.
Daraufhin beginnt die Verarbeitung der Konfigurationsworte (0603). Es sei angenommen, daß der Befehl Nummer 3 (1,3 MUL) nicht ausgeführt werden kann, da die Zelle mit der Adresse (1,3) nicht umkonfiguriert werden kann. Die Daten werden nun in den FIFO-Speicher kopiert. Mit Erreichen des DISPATCH-Befehls (0604) wird an die Adresse 41 in der Sprung-Tabelle, eine neue Adresse eingetragen (0602). Der END-Befehl versetzt die Ladelogik wieder in den 'warten auf ein Ereignis' Zustand.
Nach einiger Zeit triff nun wieder ein Signal von der Zelle 41 ein. Jetzt steht an der Adresse 42 der Sprung-Tabelle eine andere Adresse (0602). Die Ladelogik arbeitet wieder zuerst den FIFO Speicher ab. Nun befinden sich Daten in dem FIFO-Speicher.
Die Daten aus dem FIFO-Speicher werden gelesen und es wird versucht die adressierte Zelle mit den Daten zu laden. Da die Zelle jetzt umkonfiguriert werden kann, gelingt dies. Der Eintrag des FIFO Speichers wird daraufhin mit einer Leer-Kennung beschrieben.
Die ursprüngliche Verarbeitung wird fortgeführt und das Lesen von Konfigurationsdaten beginnt nun an einer unterschiedlichen Adresse (0605).
Diese Konfiguration wird abgearbeitet, der DISPATCH-Befehl schreibt diesmal eine Adresse in den Eintrag Nummer 12 der Sprung-Tabelle (0606). Danach versetzt der END-Befehl die Ladelogik wieder in den Zustand 'warten auf ein Ereignis'.
Dieses Wechselspiel wiederholt sich während der gesamten Laufzeit des Systems.

### Begriffsdefinition

**konfigurierbares Element** Ein konfigurierbares Element stellt eine Einheit eines Logik-Bausteines dar, welche durch ein Konfigurationswort für eine spezielle Funktion eingestellt werden kann. Konfigurierbare Elemente sind somit, alle Arten von RAM-Zellen, Multiplexer, Arithmetische logische Einheiten, Register und alle Arten von interner und externer Vernetzungsbeschreibung etc.

**Konfigurieren** Einstellen der Funktion und Vernetzung eines konfigurierbaren Elements.

**Konfigurationsspeicher** Der Konfigurationspeicher enthält ein oder mehrere Konfigurationsworte.

**Konfigurationswort** Ein Konfigurationswort besteht aus einer beliebig langen Bit-Reihe. Diese Bit-Reihe stellt eine gültige Einstellung für das zu konfigurierende Element dar, so das eine funktionsfähige Einheit entsteht.

**Ladelogik** Einheit zum Konfigurieren und Umkonfigurieren von programmierbaren Bausteinen. Ausgestaltet durch einen speziell an seine Aufgabe angepaßten Mikrokontroller oder eine Zustandsmaschine.

**Makro** Ein Makro ist eine Menge von Zellen, welche zusammen eine Aufgabe, Funktion etc. implementieren.}

**Umkonfigurieren** Neues Konfigurieren von einer beliebigen Menge von konfigurierbaren Elementen eines programmierbaren Bausteins während eine beliebige Restmenge von konfigurierbaren Elementen ihre eigenen Funktionen fortsetzen (vgl. konfigurieren).

**Rückmeldung** Eine Rückmeldung ist eine Aktion, welche eine Zelle auslösen kann. Bei einer Rückmeldung Können verschiedene Informationen an die Einheit gesandt werden, welche die Rückmeldung empfängt.

**Zelle** siehe konfigurierbares Element.

**Zustandsmaschine** Logik, die diversen Zuständen annehmen kann. Die Übergänge zwischen den Zuständen sind von verschiedenen Eingangsparametern abhängig. Diese Maschinen werden zur Steuerung komplexer Funktionen eingesetzt und entsprechen dem Stand der Technik

## Patentansprüche

1. Verfahren zum Umkonfigurieren zur Laufzeit von programmierbaren Bausteinen, mit einer zwei- oder mehrdimensionalen Zellanordnung, zum Beispiel FPGAs, DPGAs, DFPs, dadurch gekennzeichent,
daß 1. mindestens eine Ladelogik existiert (Fig. 5), welche auf Signale reagiert und spezielle Ladelogik-Befehle, innerhalb eines Konfigurationsprogramms, bestehend aus Daten und Befehlen, erkennt und verarbeitet, sowie auf Grund der Quelle eines Ereignisses einen Eintrag in einer Sprung-Tabelle berechnet, und
daß 2. mindestens eine Sprung-Tabelle (0506) zum Auffinden der Adresse der zu ladenden Konfigurationsdaten, welche berechnet wurde, existiert,
daß 3. mindestens ein Konfigurations-Speicherbereich (0508) in einem Konfigurationsspeicher existiert, in dem mindestens ein Konfigurationsprogramm geladen ist ,
daß 4. mindestens ein FIFO-Speicherbereich (0509) existiert, in den Konfigurationsdaten kopiert werden, welche nicht an die zu konfigurierende Zelle gesandet werden konnten,
daß 5. ein Ereignis (Fig. 2) eintrifft und auf Grund der Quelle des Ereignisses eine Adresse in der Sprung-Tabelle berechnet wird,
daß 6. der FIFO-Speicherbereich vor jedem Umkonfigurieren durchlaufen und abgearbeitet wird, und falls die Zelle nicht umkonfiguriert werden kann, die Konfigurationsdaten näher an den Anfang des FIFO-Speicherbereichs kopiert werden, indem Speicherbereiche, die an eine konfigurierbare Zelle übertragen wurden, überschrieben werden, wobei die Reihenfolge der Speicherbereiche unverändert bleibt, oder, falls die Zelle umkonfiguriert werden kann, die Konfigurationsdaten an die Zelle übertragen werden (Fig. 3),
daß 7. der berechnete Sprung-Tabelleneintrag ausgelesen wird, und die Konfigurationsdaten, welche an der ausgelesenen Adresse gespeichert sind, in die Zelle geladen werden oder, falls die Zelle nicht umkonfiguriert werden kann, in den FIFO-Speicherbereich kopiert werden (Fig. 3),
daß 8. die Ladelogik in einen Zustand (0104, 0403) zurückspringt, in dem sie auf Ereignisse warten und auf diese reagieren kann.

2. Verfahren nach Anspruch 1, **dadurch gekennzeichnet, daß**
der Konfigurationspeicher eine oder mehrere Konfigurationen speichert, welche eine oder mehrere komplette Konfigurationen für einen oder mehrere Bausteine enthält (Fig. 5).

3. Verfahren nach Anspruch 1, **dadurch gekennzeichnet, daß**
der Konfigurationspeicher eine oder mehrere Teilkonfigurationen speichert, welche nur einen Teil einer kompletten Konfiguration, eines oder mehrerer Bausteine darstellt (Fig. 5).

4. Verfahren nach Anspruch 1, **dadurch gekennzeichnet, daß**
die Ladelogik ein Start-Konfigurations Register (0501) enthält, welches auf eine Startkonfiguration zeigt, welche den oder die Bausteine in einen gültigen Zustand versetzt.

5. Verfahren nach Anspruch 1, **dadurch gekennzeichnet, daß**
die Ladelogik ein FIFO-Start Register (0502) enthält, welches auf den Beginn des speziellen Speicherbereichs zeigt, in den Konfigurationsdaten kopiert werden.

6. Verfahren nach Anspruch 1, **dadurch gekennzeichnet, daß**
die Ladelogik ein FIFO-End Register (0503) enthält, welches auf das Ende des speziellen Speicherbereichs zeigt, in den Konfigurationsdaten kopiert werden.

7. Verfahren nach Anspruch 1, **dadurch gekennzeichnet, daß**
die Ladelogik ein FIFO-Free-Entry Register (0504) enthält, welches auf den ersten freien Eintrag, des speziellen Speicherbereichs zeigt, in den Konfigurationsdaten kopiert werden, zeigt, der dem Beginn dieses Speicherbereichs am nächsten ist.

8. Verfahren nach Anspruch 1, **dadurch gekennzeichnet, daß**
die Ladelogik ein Programmzähler Register (0505) enthält, welches auf den zu verarbeitenden Eintrag innerhalb des Konfigurationsspeichers zeigt.

9. Verfahren nach Anspruch 1, **dadurch gekennzeichnet, daß**
die Ladelogik ein Adress Register (0510) enthält, welches die Adresse (Nummer, Koordianten etc.) der Zelle enthält, die von dem verarbeiteten Konfigurationswort konfiguriert wird.

10. Verfahren nach Anspruch 1, **dadurch gekennzeichnet, daß**
die Ladelogik ein Data Register (0511) enthält, welches die Konfigurationsdaten der Zelle enthält, welche an die Zelle, bei einer Umkonfigurierung, übertragen werden.

11. Verfahren nach Anspruch 1, **dadurch gekennzeichnet, daß** die Ladelogik ein Dispatch Register (0512) enthält, welches die aus der Zelladresse berechnete Adresse des Eintrags in der Sprung-Tabelle enthält.

## Claims

1. Method of reconfiguring during the running time of programmable components, with a two- or multi-dimensional arrangement of cells, for example FPGAs, DPGAs, DFPs, **characterised in that**
1. there is at least one loading logic (Fig. 5), which reacts to signals and recognises and processes special loading logic commands within a configuration program consisting of data and commands and calculates an entry in a jump table on the basis of the source of an event and
2. there is at least one jump table (0506) for locating the address of the configuration data to be loaded, which has been calculated,
3. there is at least one configuration memory area (0508) in a configuration memory, in which at least one configuration program is loaded,
4. there is at least one FIFO memory area (0509), in which configuration data which could not be sent to the cell to be configured are copied
5. an event (Fig. 2) occurs and on the basis of the source of the event an address is calculated in the jump table,
6. the FIFO memory area is run through and serviced before each reconfiguring and if the cell cannot be reconfigured the configuration data are copied closer to the beginning of the FIFO memory area, **in that** memory areas which have been transferred to a configurable cell are overwritten, wherein the sequence of the memory areas remains unchanged, or, if the cell can be reconfigured, the configuration data are transferred to the cell (Fig. 3),
8. (*sic*) the calculated jump table entry is read out and the configuration data stored at the read-out address are loaded into the cell, or, if the cell cannot be reconfigured, are copied into the FIFO memory area (Fig. 3),
9. the loading logic jumps back into a state (0104, 0403) in which it can wait for events and react to them.

2. Method according to Claim 1, **characterised in that** the configuration memory stores one or more configurations containing one or more complete configurations for one or more components (Fig. 5).

3. Method according to Claim 1, **characterised in that** the configuration memory stores one or more partial configurations representing only part of a complete configuration of one or more components (Fig. 5).

4. Method according to Claim 1, **characterised in that** the loading logic contains a start configuration register (0501) indicating a start configuration which puts the component or components into a valid state.

5. Method according to Claim 1, **characterised in that** the loading logic contains a FIFO start register (0502) indicating the beginning of the special memory area in which configuration data are copied.

6. Method according to Claim 1, **characterised in that** the loading logic contains a FIFO end register (0503) indicating the end of the special memory area in which configuration data are copied.

7. Method according to Claim 1, **characterised in that** the loading logic contains a FIFO free entry register (0504) indicating the first free entry of the special memory area in which configuration data are copied which is closest to the beginning of this memory area.

8. Method according to Claim 1, **characterised in that** the loading logic contains a program counter register (0505) indicating the entry to be processed within the configuration memory.

9. Method according to Claim 1, **characterised in that** the loading logic contains an address register (0510) containing the address (number, coordinates, etc.) of the cell which is configured by the processed configuration word.

10. Method according to Claim 1, **characterised in that** the loading logic contains a data register (0511) containing the configuration data of the cell, which are transferred to the cell on reconfiguration.

11. Method according to Claim 1, **characterised in that** the loading logic contains a dispatch register (0512) containing the address of the entry in the jump table calculated from the cell address.

## Revendications

1. Procédé de reconfiguration de composants programmables pendant leur durée de fonctionnement, avec un agencement de cellules à deux dimensions ou à plusieurs dimensions, par exemple PFGA, DGPA, DFP, **caractérisé en ce que**
1. il existe au moins une logique de charge (figure 5) qui réagit à des signaux et qui détecte et traite des instructions spéciales de la logique de charge, à l'intérieur d'un programme de configuration, composé de données et d'instructions, et qui, sur la base de la source d'un événement, calcule une entrée dans un tableau de saut,
2. il existe au moins un tableau de saut (0506) permettant de trouver l'adresse des données de configuration à charger qui a été trouvée,
3. il existe au moins une zone de mémoire de configuration (0508) dans une mémoire de configuration dans laquelle au moins un programme de configuration est chargé,
4. il existe au moins une zone de mémoire FIFO (0509), dans laquelle sont copiées des données de configuration qui n'ont pas pu être envoyées à la cellule à configurer,
5. il arrive un événement (figure 2) et, sur la base de la source de l'événement, une adresse est calculée dans le tableau de saut,
6. la zone de mémoire FIFO, avant chaque reconfiguration, est parcourue et traitée, et si la cellule ne peut pas être reconfigurée, les données de configuration situées plus près du début de la zone de mémoire FIFO sont copiées par écrasement de zones de mémoire qui ont été transférées vers une cellule configurable, à l'occasion de quoi l'ordre des zones de mémoire demeure inchangé, ou bien, si la cellule peut être reconfigurée, les données de configuration sont transférées vers la cellule (figure 3),
7. l'entrée calculée du tableau de saut est extraite et les données de configuration qui sont stockées à l'adresse extraite sont chargées dans la cellule ou bien, si la cellule ne peut pas être reconfigurée, sont copiées dans la zone de mémoire FIFO (figure 3),
8. la logique de charge retourne à un état (0104, 0403) dans lequel elle attend des événements et peut réagir à ceux-ci.

2. Procédé selon la revendication 1, **caractérisé en ce que** la mémoire de configuration stocke une ou plusieurs configurations qui contiennent une ou plusieurs configurations complètes pour un ou plusieurs composants (figure 5).

3. Procédé selon la revendication 1, **caractérisé en ce que** la mémoire de configuration stocke une ou plusieurs configurations partielles qui ne représentent qu'une partie d'une configuration complète d'un ou de plusieurs composants (figure 5).

4. Procédé selon la revendication 1, **caractérisé en ce que** la logique de charge contient un registre de configuration de démarrage (0501) qui indique une configuration de démarrage qui déplace le ou les composants dans un état valide.

5. Procédé selon la revendication 1, **caractérisé en ce que** la logique de charge contient un registre de démarrage de FIFO (0502) qui indique le début de la zone de mémoire spéciale dans laquelle sont copiées des données de configuration.

6. Procédé selon la revendication 1, **caractérisé en ce que** la logique de charge contient un registre de fin de FIFO (0503) qui indique la fin de la zone de mémoire spéciale dans laquelle sont copiées des données de configuration.

7. Procédé selon la revendication 1, **caractérisé en ce que** la logique de charge contient un registre Free-Entry de FIFO (0504) qui indique la première entrée libre de la zone de mémoire spéciale, dans laquelle sont copiées des données de configuration, qui est la plus proche du début de cette zone de mémoire.

8. Procédé selon la revendication 1, **caractérisé en ce que** la logique de charge contient un registre de compteur de programme (0505) qui indique l'entrée à traiter à l'intérieur de la mémoire de configuration.

9. Procédé selon la revendication 1, **caractérisé en ce que** la logique de charge contient un registre d'adresses (0510) qui contient l'adresse (numéro, coordonnées, etc.) de la cellule qui est configurée par le mot de configuration traité.

10. Procédé selon la revendication 1, **caractérisé en ce que** la logique de charge contient un registre de données (0511) qui contient les données de configuration de la cellule qui sont transférées vers la cellule lors d'une reconfiguration.

11. Procédé selon la revendication 1, **caractérisé en ce que** la logique de charge contient un registre Dispatch (0512) qui contient l'adresse, calculée à partir de l'adresse de cellule, de l'entrée dans le tableau de saut.
